# EUROPEAN PATENT APPLICATION

(11) **EP 2 453 512 A1**
(43) Date of publication of application: **16.05.2012**
(21) Application number: 11188295.7
(22) Date of filing: 08.11.2011
(51) Int. Cl.: H01M 10/44, G01R 21/133, H02J 3/32

(54) **Systems, methods, and apparatus for demand response of battery-powered devices**

(30) Priority: 12.11.2010 US 945458
(71) Applicant: General Electric Company, Schenectady, NY 12345 (US)
(72) Inventor: Littrell, Nathan Bowman, Minden, NV Nevada 89423 (US)
(74) Representative: Bedford, Grant Richard

(57) **Abstract**

A power management device (114) for use with an electrical device (110) configured to receive electrical power from at least one of a power grid (104) and a battery (112), wherein the power management device (114) includes a switch (120) configured to selectively connect the electrical device (110) to the power grid (104) and the battery (112), and a processor (124) coupled to the switch (120) and configured to detect a demand event while the electrical device (110) is connected to the power grid (104), cause the switch (120) to disconnect the electrical device (110) from the power grid (104) and enable the electrical device (110) to receive electrical power the battery (112), and cause the switch (120) to reconnect the electrical device (110) to the power grid (104).

## Description

The embodiments described herein relate generally to electrical devices and, more particularly, to systems and methods for use in reducing a load on a power grid using devices that are operable on battery-power and on power obtained from the power grid.

At least some known electrical devices, such as computers, are operable using power received from the power grid or power stored in a battery. However, switching between power sources is generally a manual operation. For example, a user must physically disconnect the computer from the power grid in order to use energy stored in a battery. Moreover, at least some known electrical devices, such as home appliances, are not operable to use energy stored in a battery. To reduce the load on the power grid caused by such devices, generally the devices must be completely powered off. For example, a user may use a power switch at the appliance itself or may disconnect the appliance from the power grid using a circuit interruption device, such as a circuit breaker. However, such an action also requires the user to physically disconnect the appliance from the power grid.

In one aspect according to the present invention, a method is provided for controlling demand response of an electrical device that is configured to receive electrical power from at least one of a power grid and a battery. The method includes detecting a demand event at the electrical device while receiving power from the power grid, automatically disconnecting the electrical device from the power grid by a power management device and receiving power from the battery by the electrical device, and automatically reconnecting the electrical device to the power grid by the power management device.

In another aspect, a power management device is provided for use with an electrical device that is configured to receive electrical power from at least one of a power grid and a battery. The power management device includes a switch configured to selectively connect the electrical device to the power grid and the battery, and a processor coupled to the switch and configured to detect a demand event while the electrical device is connected to the power grid, cause the switch to disconnect the electrical device from the power grid and enable the electrical device to receive electrical power the battery, and cause the switch to reconnect the electrical device to the power grid.

In another aspect, a power management system includes at least one electrical device configured to receive electrical power from at least one of a power grid and a battery, and at least one power management device coupled to the electrical device. The power management device includes a switch configured to selectively connect the electrical device to the power grid and the battery, and a processor coupled to the switch and configured to detect a demand event while the electrical device is connected to the power grid, cause the switch to disconnect the electrical device from the power grid and enable the electrical device to receive electrical power from the battery, and cause the switch to reconnect the electrical device to the power grid.

Various aspects and embodiments of the present invention will now be described in connection with the accompanying drawings, in which:
FIG. 1 is a block schematic diagram of an exemplary power management system;
FIG. 2 is a block diagram of an exemplary power management device and an exemplary electrical device that may be used with the power management system shown in FIG. 1; and
FIG. 3 is a flowchart that illustrates an exemplary method of implementing demand response in an electrical device using the power management system shown in FIG. 1.

Exemplary embodiments of systems, methods, and apparatus for enabling demand response in electrical devices are described herein. The embodiments described herein enable automated demand-responsive load management within a site, such as a house or business. Load management at such sites facilitates reducing a load on a power grid from an electrical device during peak times by switching the electrical device from using the power grid as an energy source to using a battery as an energy source.

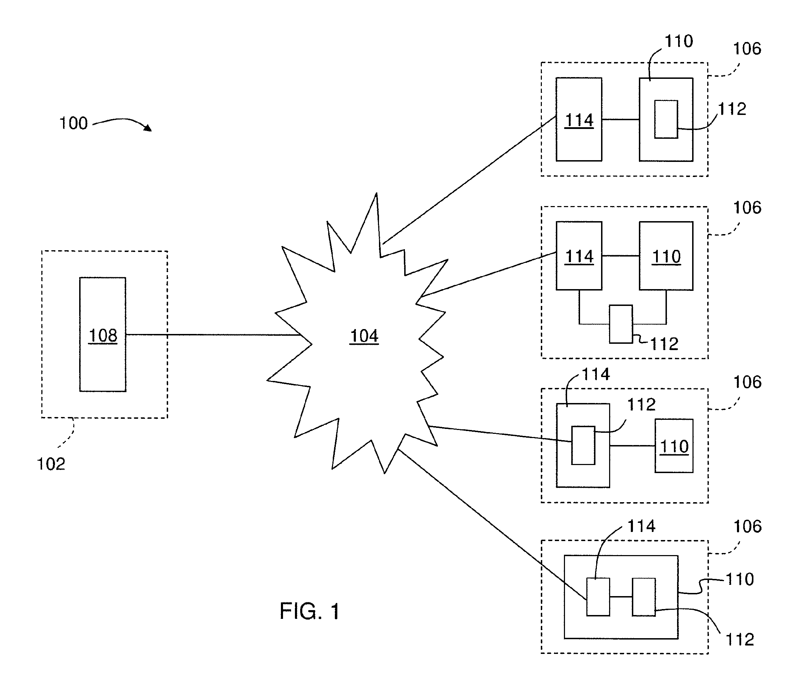

FIG. 1 is a block schematic diagram of an exemplary power management system 100. In the exemplary embodiment, power management system 100 includes a power utility 102 that generates and/or sells power, a power grid 104 that distributes power, and a plurality of sites 106 that consume power. Power utility 102 includes at least one computer 108 that includes a memory area (not shown) for storing, for example, power usage data, billing data, and any other suitable power generation and/or distribution data. Computer 108 also includes a processor (not shown) that tracks energy usage at sites 106 and that generates billing statements based on energy usage during a period of time. Computer 108 also determines when power demand within system 100 is greater than a preselected threshold and issues a notification of a power management event or a demand event to sites 106. In response, sites 106 reduce their respective loads on power grid 104. To notify sites 106 of such an event, computer 108 transmits a signal representative of the demand event to sites 106 via power grid 104.

In the exemplary embodiment, power grid 104 distributes power, such as electrical energy, to sites 106. Power grid 104 may include, but is not limited to only including, transformers (not shown) such as step-up and step-down transformers, and transmission and distribution lines (not shown) such as overhead power lines and underground power lines. However, power grid 104 may also include any other suitable equipment that facilitates transmission of power and/or communication signals to sites 106. Moreover, in the exemplary embodiment, power grid 104 distributes alternating current (AC) power using three-phase AC current or single-phase AC current. Alternatively, power grid 104 may distribute power direct current (DC), such as using high-voltage DC current.

In the exemplary embodiment, each site 106 includes at least one electrical device 110. As used herein, the term "electrical device" refers to any device that uses electrical energy to perform one or more functions, wherein the electrical energy is supplied by power grid 104 or is obtained from a battery. Exemplary electrical devices include computers, televisions, home appliances, or any other suitable device. The above examples are exemplary only, and thus are not intended to limit in any way the definition and/or meaning of the term "electrical device." As shown in FIG. 1, electrical device 110 may include a battery 112 or may be coupled to an external battery 112.

Moreover, each site 106 includes at least one power management device 114 that is coupled to power grid 104 and to electrical device 110. As shown in FIG. 1, power management device 114 may be a component of electrical device 110 or may be located external to electrical device 110. In the exemplary embodiment, power management device 114 receives a control signal from computer 108 via power grid 104 indicative of a demand event to power management device 114. In response to the signal, power management device 114 reduces the load on power grid 104 from electrical device 110 by switching from power provided to electrical device 110 by power grid 104 to power stored within battery 112. In addition, power management device 114 also switches from using power stored within battery 112 to using power provided by power grid 104. The control signal may be related to a price of energy distributed via power grid 104 and/or related a time of the day, week, month, or year. Alternatively, the control signal may be a command by power utility 102 to disconnect one or more loads from power grid 104. For example, computer 108 may detect a spike in power drawn from power grid 104 and may transmit the control signal, as a direct load control signal, to power management device 114. In response to the direct load control signal, power management device 114 causes electrical device 110 to switch from power provided to electrical device 110 by power grid 104 to power stored within battery 112.

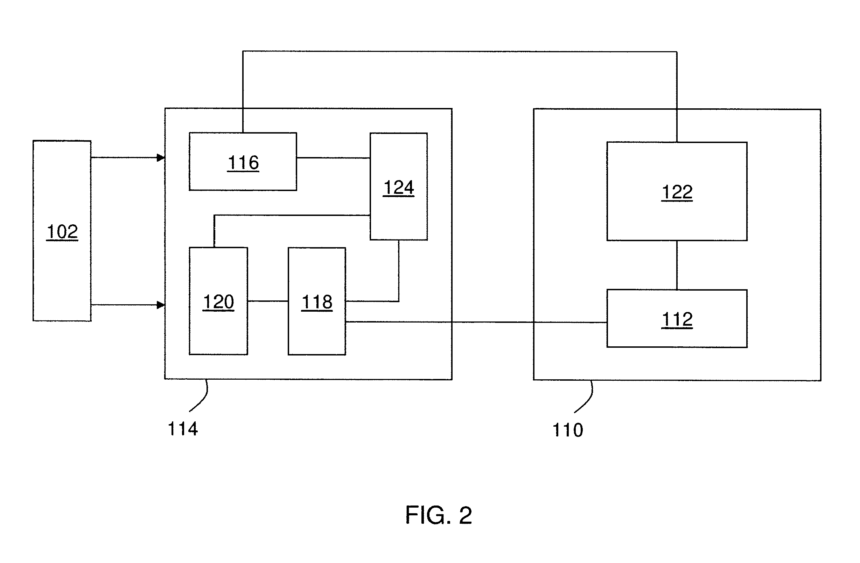

FIG. 2 is a block diagram of power management device 114 and electrical device 112. Although, FIG. 2 illustrates power management device 114 as being separate from electrical device 112, it should be understood that power management device 114 may be integrated into or formed integrally with electrical device 112. Moreover, power management device 114 may be integrated into an external power converter (not shown) that converts AC power to DC power for use by electrical device 112. In the exemplary embodiment, power management device 114 includes a network communication circuit 116 that receives signals from utility 102 and, more specifically, from computer 108 (shown in FIG. 1). For example, network communication circuit 116 receives signals that indicate a demand event due to load on utility 102. In addition, network communication circuit 116 receives signals that include a current energy price, such as a price per kilowatt. Furthermore, network communication circuit 116 receives signals indicative of a change in an energy price over time, such as an increase or decrease of a price per kilowatt over a specified time period. Network communication circuit 116 also transmits signals to computer 108, such as, but not limited to, acknowledgement signals transmitted in response to a demand event notification and/or notification of a user override that enables electrical device 110 to draw power from power grid 104 during a demand event. In some embodiments, network communication circuit 116 is coupled to electrical device 110 to notify electrical device 110 of a demand event.

Moreover, in the exemplary embodiment, power management device 114 includes an AC/DC power converter 118 that converts AC power signals received from utility 102 via power grid 104 (shown in FIG. 1) into DC power signals for use by electrical device 110. Power converter 118 also transmits DC power signals to battery 112 for use in recharging battery 112. Furthermore, in the exemplary embodiment, power management device 114 includes a switch 120 that controls whether power converter 118 supplies DC power to electrical device 110 and/or battery 112. During normal operations, switch 120 is closed, thus enabling power converter 118 to transmit DC power signals to electrical device 110 for use by one or more electrical components 122, such as processors, memory modules, display devices, network devices, or any other electrical component. In addition, based on a charge level of battery 112, power converter 118 may transmit the DC power signals to battery 112 for use in recharging. Switch 120 opens during a demand event, and disables power converter 118 from supplying DC power to electrical device 110 and/or battery 112.

In the exemplary embodiment, power management device 114 also includes a processor 124 that is coupled to network communication circuit 116, to power converter 118, and to switch 120. Processor 124 senses whether electrical device 110 is receiving DC power from power converter 118. Moreover, processor 124 processes demand event signals received by network communication circuit 116 and creates messages to transmit to computer 108 that acknowledge the demand event. Processor 124 also determines when electrical device 110 is to be removed from power grid 104 during times other than a demand event, such as when a current energy price is equal to, or greater than, a threshold price. Alternatively, processor 124 may detect when a change in an energy price over a specified time period is equal to, or greater than, a threshold amount. Accordingly, power management device 114 removes electrical device 110 from power grid 104 at times other than during a demand event, based on configurable variables. The configurable variables, such as the threshold price, the threshold change in price, and/or the time period over which the change in price is measured, may be configured by a user, a utility operator, and/or a manufacturer of electrical device 110 or equipment used by utility 102.

During normal operations, switch 120 is closed, thus enabling power converter 118 to transmit DC power signals to electrical device 110. Moreover, network communication circuit 116 senses incoming messages from computer 108 that are indicative of a demand event. When network communication circuit 116 receives a demand event message from computer 108, processor 124 causes network communication circuit 116 to respond with an acknowledgement message. Processor 124 also causes switch 120 to open, thus preventing power converter 118 from transmitting the DC power signals to electrical device 110. In response, electrical device 110 is no longer powered by power converter 118 but, rather, is powered by battery 112. During the demand event, network communication circuit 116 senses incoming messages from computer 108 indicative of an end of the demand event. When the demand event has ended, processor 124 causes switch 120 to close, thus enabling power converter 118 to transmit DC power signals to electrical device 110.

The demand event may be overridden by a user input or due to lack of charge in battery 112. For example, processor 124 and/or electrical device 110 monitor a charge status of battery 112. If the charge level becomes less than a threshold charge level, processor 124 causes switch 120 to close, thus enabling power converter 118 to transmit DC power signals to electrical device 110 and to recharge battery 112. When battery 112 is fully recharged or is charged beyond a desired level, processor 124 may cause switch 120 to open to remove electrical device 110 from power grid 104. Alternatively, a user may enter a user override command via electrical device 110 or power management device 114. In response to the user override command, processor 124 causes switch 120 to close, thus enabling power converter 118 to transmit DC power signals to electrical device 110. Processor 124 may also cause network communication circuit 116 to transmit a message to computer 108 that the demand event has been locally overridden.

In some embodiments, network communication circuit 116 also receives messages from computer 108 that are related to a current energy price. Processor 124 compares the current energy price to a threshold price. If the current energy price is higher than the threshold price, processor 124 causes switch 120 to open, to prevent power converter 118 from transmitting the DC power signals to electrical device 110. Similarly, processor 124 may determine a change in an energy price over a specified time period and compare the change to a threshold change. If the change in energy price is higher than the threshold, processor 124 causes switch 120 to open, thus preventing power converter 118 from transmitting the DC power signals to electrical device 110. In an alternative embodiment, processor 124 determines the current time and determines whether the current time is associated with a known period of high demand or load on power grid 104. If the current time is associated with such a known period, processor 124 causes switch 120 to open, thus preventing power converter 118 from transmitting the DC power signals to electrical device 110.

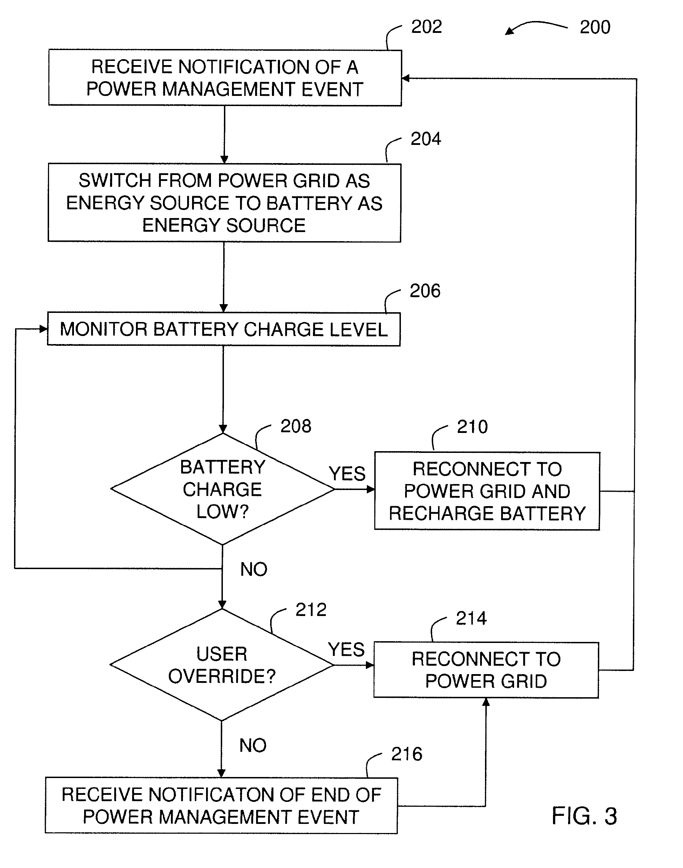

FIG. 3 is a flowchart 200 illustrating an exemplary method that may be used to implement demand response in an electrical device, such as electrical device 110 (shown in FIGS. 1 and 2). In the exemplary embodiment, power management device 114 (shown in FIGS. 1 and 2) receives 202 a notification that indicates the start of a power management event, such as a demand event that facilitates reducing a total load on power grid 104 (shown in FIG. 1). The power management event may be initiated by utility 102 (shown in FIGS. 1 and 2) via a signal from computer 108 (shown in FIG. 1) to network communication circuit 116 (shown in FIG. 2). Alternatively, the power management event may be initiated based on energy price. For example, power management device 114 may compare a current energy price to a threshold price or may compare a change in an energy price over a specified time period to a threshold amount. In another alternative, the power management event may be initiated based on a time, such as a time of day. For example, power management device 114 may compare the current time of day to one more time periods that are related to periods of typically high demand from power grid 104.

In response to the notification, power management device 114 causes electrical device 110 to switch 204 from power grid 104 as an energy source to battery 112 (shown in FIGS. 1 and 2) as an energy source. For example, processor 124 causes switch 120 to open, to prevent power converter 118 (shown in FIG. 2) from transmitting DC power signals to electrical device 110. During the power management event, power management device 114 and/or electrical device 110 monitor 206 a charge level of battery 112. For example, in the exemplary embodiment, processor 124 monitors 206 the charge level of battery 112. If processor 124 determines 208 that the charge level of battery 112 is below a threshold level, processor 124 causes switch 120 to close, thus enabling electrical device 110 to reconnect 210 to power grid 104 and enables power converter 118 to transmit DC power signals to electrical device 110 and to recharge battery 112. When battery 112 is fully recharged or is charged beyond a desired level, processor 124 may cause switch 120 to open, which again removes electrical device 110 from power grid 104. If the charge level of battery 104 is not below the threshold level, processor 124 continues to monitor 206 the charge level of battery 112.

Moreover, power management device 114 determines 212 whether a user override command has been entered. For example, processor 124 determines 212 whether a user override command has been entered and causes switch 120 to close in response to the user override command, thus enabling electrical device 110 to reconnect 214 to power grid 104. More specifically, processor 124 causes switch 120 to close, thus causing power converter 118 to transmit DC power signals to electrical device 110. Processor 124 may also cause network communication circuit 116 to transmit a message to computer 108 to notify computer 108 that the demand event has been locally overridden. If no override command has been entered, electrical device 110 will continue to receive power from battery 112. In the exemplary embodiment, power management device 114 or, more specifically, processor 124, receives 216 a notification indicative of the end of the power management event. In response to the notification, processor 124 enables electrical device 110 to receive power from power grid 104. For example, processor 124 causes switch 120 to close, thus enabling power converter 118 to transmit DC power signals to electrical device 110 and battery 112. In an alternative embodiment, the power management event may expire after a preselected time period. In such an embodiment, processor 124 detects that the time period has expired and causes switch 120 to close, thus enabling power converter 118 to transmit DC power signals to electrical device 110 and battery 112.

Exemplary embodiments of systems, methods, and apparatus for enabling demand response in electrical devices are described herein in detail. In the exemplary embodiment, a power management device receives a notification of a power management event from a utility through, for example, a home area network or a gateway. The power management device responds to the event by reducing the load on a power grid from one or more electrical devices by causing the electrical devices to switch to battery power. The electrical devices continue to use battery power until either the battery uses all or substantially all of its charge, or until the event is cancelled by the utility. If the battery uses a threshold amount of charge, the power management device enables the electrical device to resume receiving power from the utility while the battery recharges. When the battery has recharged fully or has charged to a specified level, the power management device either causes the electrical device to resume using battery power if the event is still in effect from the utility, or enables the electrical device to continue receiving power from the utility. The systems, methods, and apparatus are not limited to the specific embodiments described herein but, rather, operations of the methods and/or components of the systems and/or apparatus may be utilized independently and separately from other operations and/or components described herein. Further, the described operations and/or components may also be defined in, or used in combination with, other systems, methods, and/or apparatus, and are not limited to practice with only the systems, methods, and apparatus described herein.

Exemplary technical effects of the systems, methods, and apparatus described herein may include at least one of: (a) receiving an electronic notification of a power management event; (b) automatically switching an electronic device from drawing power from a power grid to using power stored by a battery; (c) using a processor to monitor a charge level of the battery while the electronic device is disconnected from the power grid, automatically reconnecting to the power grid if the charge level is less than a preselected threshold, and recharging the battery; (d) detecting a user override command, automatically reconnecting to the power grid, and recharging the battery; and (e) receiving an electronic notification of an end of the power management event, reconnecting to the power grid, and recharging the battery.

A computer, such as those described herein, includes at least one processor or processing unit and a system memory. The computer typically has at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Although the present invention is described in connection with an exemplary power distribution system environment, embodiments of the invention are operational with numerous other general purpose or special purpose power distribution system environments or configurations. The power distribution system environment is not intended to suggest any limitation as to the scope of use or functionality of any aspect of the invention. Moreover, the power distribution system environment should not be interpreted as having any dependency or requirement relating to any one or combination of components illustrated in the exemplary operating environment.

Embodiments of the invention may be described in the general context of computer-executable instructions, such as program components or modules, executed by one or more computers or other devices. Aspects of the invention may be implemented with any number and organization of components or modules. For example, aspects of the invention are not limited to the specific computer-executable instructions or the specific components or modules illustrated in the figures and described herein. Alternative embodiments of the invention may include different computer-executable instructions or components having more or less functionality than illustrated and described herein.

The order of execution or performance of the operations in the embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

When introducing elements of aspects of the invention or embodiments thereof, the articles "a," "an," "the," and "said" are intended to mean that there are one or more of the elements. The terms "comprising," including," and "having" are intended to be inclusive and mean that there may be additional elements other than the listed elements.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for controlling demand response of an electrical device configured to receive electrical power from at least one of a power grid and a battery, said method comprising:
   while receiving power from the power grid, detecting a demand event at the electrical device;
   automatically disconnecting the electrical device from the power grid by a power management device and receiving power from the battery by the electrical device; and
   automatically reconnecting the electrical device to the power grid by the power management device.
2. A method in accordance with clause 1, wherein detecting a demand event comprises determining a current time and determining whether the current time is associated with a known demand event.
3. A method in accordance with any preceding clause, wherein detecting a demand event comprises determining a change in energy price and comparing the change in energy price to a threshold change, wherein the demand event is indicated when the change in energy price is greater than the threshold change.
4. A method in accordance with any preceding clause, wherein detecting a demand event comprises receiving a control signal from a utility, the control signal including a disconnect command.
5. A method in accordance with any preceding clause, wherein reconnecting the electrical device to the power grid comprises monitoring an amount of charge remaining in the battery and reconnecting the electrical device to the power grid when the amount of charge is less than a threshold amount of charge.
6. A power management device for use with an electrical device configured to receive electrical power from at least one of a power grid and a battery, said power management device comprising:
   a switch configured to selectively connect the electrical device to the power grid and the battery; and
   a processor coupled to said switch and configured to:
      detect a demand event while the electrical device is connected to the power grid;
      cause said switch to disconnect the electrical device from the power grid and enable the electrical device to receive electrical power the battery; and
      cause said switch to reconnect the electrical device to the power grid.
7. A power management device in accordance with any preceding clause, further comprising a network communication circuit coupled to said processor, wherein said network communication circuit is configured to receive a signal representative of the demand event and transmit the signal to said processor.
8. A power management device in accordance with any preceding clause, wherein said processor is configured to determine a current time and to determine whether the current time is associated with a known demand event.
9. A power management device in accordance with any preceding clause, wherein said processor is configured to determine a current energy price, compare the current energy price to a threshold energy price, and detect the demand event when the current energy price is greater than the threshold energy price.
10. A power management device in accordance with any preceding clause, wherein said processor is configured to determine a change in energy price, compare the change in energy price to a threshold change, and detect the demand event when the change in energy price is greater than the threshold change.
11. A power management device in accordance with any preceding clause, wherein said processor is further configured to monitor an amount of charge remaining in the battery and to cause said switch to reconnect the electrical device to the power grid when the amount of charge is less than a threshold amount of charge.
12. A power management device in accordance with any preceding clause, wherein said processor is further configured to detect an end of the demand event and to cause said switch to reconnect the electrical device to the power grid.
13. A power management device in accordance with any preceding clause, wherein said processor is further configured to receive a user override command and to cause said switch to reconnect the electrical device to the power grid in response to the command.
14. A power management system comprising:
   at least one electrical device configured to receive electrical power from at least one of a power grid and a battery; and
   at least one power management device coupled to said at least one electrical device, said at least one power management device comprising:
      a switch configured to selectively connect said at least one electrical device to the power grid and the battery; and
      a processor coupled to said switch and configured to:
         detect a demand event while said at least one electrical device is connected to the power grid;
         cause said switch to disconnect said at least one electrical device from the power grid and enable said at least one electrical device to receive electrical power from the battery; and
         cause said switch to reconnect said at least one electrical device to the power grid.
15. A power management system in accordance with any preceding clause, wherein said processor is configured to determine a current time and to determine whether the current time is associated with a known demand event.
16. A power management system in accordance with any preceding clause, wherein said processor is configured to determine a current energy price, compare the current energy price to a threshold energy price, and detect the demand event when the current energy price is greater than the threshold energy price.
17. A power management system in accordance with any preceding clause, wherein said processor is configured to determine a change in energy price, compare the change in energy price to a threshold change, and detect the demand event when the change in energy price is greater than the threshold change.
18. A power management system in accordance with any preceding clause, wherein said processor is further configured to monitor an amount of charge remaining in the battery, and to cause said switch to reconnect said at least one electrical device to the power grid when the amount of charge is less than a threshold amount of charge.
19. A power management system in accordance with any preceding clause, wherein said processor is further configured to detect an end of the demand event and to cause said switch to reconnect said at least one electrical device to the power grid.
20. A power management system in accordance with any preceding clause, wherein said processor is further configured to receive a user override command and to cause said switch to reconnect said at least one electrical device to the power grid in response to the command.

## Claims

1. A power management device (114) for use with an electrical device (110) configured to receive electrical power from at least one of a power grid (104) and a battery (112), said power management device (114) comprising:
a switch (120) configured to selectively connect the electrical device (110) to the power grid (104) and the battery (112); and
a processor (124) coupled to said switch (120) and configured to:
detect a demand event while the electrical device (110) is connected to the power grid (104);
cause said switch (120) to disconnect the electrical device (110) from the power grid (104) and enable the electrical device (110) to receive electrical power the battery (112); and
cause said switch (120) to reconnect the electrical device (110) to the power grid (104).

2. A power management device (114) in accordance with claim 1, further comprising a network communication circuit (116) coupled to said processor (124), wherein said network communication circuit (116) is configured to receive a signal representative of the demand event and transmit the signal to said processor (124).

3. A power management device (114) in accordance with any preceding claim, wherein said processor (124) is configured to determine a current time and to determine whether the current time is associated with a known demand event.

4. A power management device (114) in accordance with any preceding claim, wherein said processor (124) is configured to determine a current energy price, compare the current energy price to a threshold energy price, and detect the demand event when the current energy price is greater than the threshold energy price.

5. A power management device (114) in accordance with any preceding claim, wherein said processor (124) is configured to determine a change in energy price, compare the change in energy price to a threshold change, and detect the demand event when the change in energy price is greater than the threshold change.

6. A power management device (114) in accordance with any preceding claim, wherein said processor (124) is further configured to monitor an amount of charge remaining in the battery (112) and to cause said switch (120) to reconnect the electrical device (110) to the power grid (104) when the amount of charge is less than a threshold amount of charge.

7. A power management device (114) in accordance with any preceding claim, wherein said processor (124) is further configured to detect an end of the demand event and to cause said switch (120) to reconnect the electrical device (110) to the power grid (104).

8. A power management device (114) in accordance with any preceding claim, wherein said processor (124) is further configured to receive a user override command and to cause said switch (120) to reconnect the electrical device (110) to the power grid (104) in response to the command.

9. A power management system (100) comprising:
at least one electrical device (110) configured to receive electrical power from at least one of a power grid (104) and a battery (112); and
at least one power management device (114) coupled to said at least one electrical device (110), said at least one power management device (114) comprising:
a switch (120) configured to selectively connect said at least one electrical device (110) to the power grid (104) and the battery (112); and
a processor (124) coupled to said switch (120) and configured to:
detect a demand event while said at least one electrical device (110) is connected to the power grid (104);
cause said switch (120) to disconnect said at least one electrical device (110) from the power grid (104) and enable said at least one electrical device (110) to receive electrical power from the battery (112); and
cause said switch (120) to reconnect said at least one electrical device (110) to the power grid (104).

10. A power management system (100) in accordance with claim 9, wherein said processor (124) is configured to determine a current time and to determine whether the current time is associated with a known demand event.

11. A power management system (100) in accordance with claim 9 or claim 10, wherein said processor (124) is configured to determine a current energy price, compare the current energy price to a threshold energy price, and detect the demand event when the current energy price is greater than the threshold energy price.

12. A power management system (100) in accordance with any of claims 9 to 11, wherein said processor (124) is configured to determine a change in energy price, compare the change in energy price to a threshold change, and detect the demand event when the change in energy price is greater than the threshold change.

13. A power management system (100) in accordance with any of claims 9 to 12, wherein said processor (124) is further configured to monitor an amount of charge remaining in the battery (112), and to cause said switch (120) to reconnect said at least one electrical device (110) to the power grid (104) when the amount of charge is less than a threshold amount of charge.

14. A power management system (100) in accordance with any of claims 9 to 13, wherein said processor is further configured to detect an end of the demand event and to cause said switch (120) to reconnect said at least one electrical device (110) to the power grid (104).

15. A power management system (100) in accordance with any of claims 9 to 14, wherein said processor is further configured to receive a user override command and to cause said switch (120) to reconnect said at least one electrical device (110) to the power grid (104) in response to the command.
